# EUROPÄISCHE PATENTSCHRIFT

(11) **EP 0 510 326 B1**
(45) Veröffentlichungstag und Bekanntmachung des Hinweises auf die Patenterteilung: **02.11.1995**
(21) Anmeldenummer: 92103032.6
(22) Anmeldetag: 24.02.1992
(51) Int. Cl.: B60T 15/20

(54) **Ventileinrichtung**
Valve
Soupape

(30) Priorität: 20.04.1991 DE 4112984
(43) Veröffentlichungstag der Anmeldung: 28.10.1992
(73) Patentinhaber: WABCO STANDARD GmbH, D-53008 Bonn (DE)
(72) Erfinder: Deike, Harl-Heinz, W-3017 Pattensen 5 (DE); Fauck, Gerhard, W-3000 Hannover 71 (DE); Kiel, Bernd, W-3050 Wunstorf 1 (DE)
(74) Vertreter: Schrödter, Manfred, Dipl.-Ing.

(56) Entgegenhaltungen:
- GB-A- 2 004 013
- GB-A- 2 080 899

## Beschreibung

Die Erfindung betrifft eine Ventileinrichtung gemäß dem Oberbegriff des Patentanspruchs 1.

Eine derartige Ventileinrichtung ist in den Blättern PI 16/1 bis PI 16/5 (Last/Leerventil 473 30. ... 0 bzw. 473 302 ... 0) der WABCO-Loseblattsammlung "Prüflehrgang I", Ausgabe März 1990/1 beschrieben. Bei der bekannten Ventileinrichtung ist ein Kolben vorgesehen, der eine von einem Verbraucherdruck beaufschlagbare erste Wirkfläche, eine vom Druckmittel aus einer ersten Druckmittelquelle beaufschlagbare, der ersten Wirkfläche entgegengerichtete Zweite Wirkfläche und eine vom Druckmittel aus einer Zweiten Druckmittelquelle beaufschlagbare, ebenfalls der ersten Wirkfläche entgegengerichtete, dritte Wirkfläche aufweist.

Der Kolben dient zur Betätigung eines kombinierten Einlaß- und Auslaßventils, über welches der Verbraucher in Abhängigkeit von der Stellung des Kolbens mit einer Druckmittelquelle oder mit einem Druckmittelauslaß verbindbar oder gegen beide absperrbar ist.

Eine derartige Ventileinrichtung wird beispielsweise in der Bremsanlage eines Kraftfahrzeugs eingesetzt, um den Bremsdruck in den Bremszylindern der Vorderachse in Abhängigkeit von dem achslastabhängig geregelten Bremsdruck in den Bremszylindern der Hinterachse bringen zu können.

Bei Ausfall des Druckes im Hinterachsbremskreis wird von der Ventileinrichtung für den Vorderachsbremskreis ein Druck ausgesteuert, der möglicherweise nicht ausreicht, um mit den Rädern der Vorderachse noch eine ausreichende Bremswirkung zu erzielen.

Diesem Umstand wird bei der bekannten Ventileinrichtung dadurch entgegengewirkt, daß ein vom Druckmittel aus dem Hinterachsbremskreis beaufschlagter weiterer Kolben vorgesehen ist, der mit einem Zum kombinierten Einlaß- und Auslaßventil gehörigen Hohlstößel baulich vereinigt ist und bei Ausfall des Druckes im Hinterachsbremskreis mittels der Kraft einer Feder in eine Stellung gebracht wird, in welcher über das Einlaßventil des kombinierten Einlaß- und Auslaßventils von der Ventileinrichtung ein Druck ausgesteuert wird, der sicherstellt, daß mit den Rädern der Vorderachse noch eine ausreichende Bremswirkung erzielt wird.

Diese bekannte Ventileinrichtung baut relativ groß, da der weitere Kolben zum Verstellen des kombinierten Einlaß- und Auslaßventils eine relative große, vom Druckmittel beaufschlagbare Wirkfläche aufweisen muß, damit er bei intaktem Hinterachsbremskreis vom Druckmittel dieses Bremskreises gegen die Federkraft in seine Ruhestellung gebracht und auch in dieser gehalten werden kann.
Zudem unterliegen das Dichtelement des weiteren Kolbens, das den hohlen Ventilstößel gegen die Gehäusewand abdichtende Dichtelement und nicht zuletzt auch die den weiteren Kolben belastende Feder einem nicht unerheblichen Verschleiß, da der mit dem hohlen Ventilstößel verbundene weitere Kolben sowohl beim Bremsvorgang als auch beim Bremslösevorgang einen Hub ausführt.

Der Erfindung liegt die Aufgabe zugrunde, eine Ventileinrichtung der eingangs erwähnten Art zu schaffen, welche es mit einfachen Mitteln ermöglicht, bei Ausfall einer einen Steuerdruck liefernden Druckmittelquelle noch einen ausreichenden Druck aussteuern zu können, ohne daß zu diesem Zweck mit dem kombinierten Einlaß- und Auslaßventil mechanisch verbundene Mittel vorgesehen sind.

Diese Aufgabe wird mit der im Patentanspruch 1 angegebenen Erfindung gelöst. Weiterbildungen und vorteilhafte Ausgestaltungen der Erfindung sind in den Unteransprüchen angegeben. Die erfindungsgemäße Ventileinrichtung besitzt ein zusätzliches Ventil, dessen Schaltkolben von den einander entgegengerichtet auf diesen einwirkenden Drücken aus zwei getrennten Druckmittelquellen belastet wird. Die einander entgegengerichteten Wirkflächen des Schaltkolbens sind so ausgelegt, daß der Schaltkolben und somit auch das zusätzliche Ventil in einer ersten definierten Stellung in Ruhe verbleiben, unabhängig davon, ob in die von den beiden Wirkflächen des Schaltkolbens begrenzten Kammern Druckmittel eingesteuert wird oder beide Kammern drucklos werden.

Nur bei Ausfall der einen Druckmittelquelle, und zwar der Druckmittelquelle, mit deren Druck die dritte Wirkfläche des Kolbens der Ventileinrichtung normalerweise beaufschlagt wird, wird der Schaltkolben vom Druckmittel der anderen Druckmittelquelle und somit auch das zusätzliche Ventil in eine zweite definierte Stellung gebracht. Vom Druckmittel dieser anderen Druckmittelquelle wird jetzt nicht nur die zweite Wirkfläche des Kolbens der Ventileinrichtung beaufschlagt, wie dies bei Vorhandensein von Druckmittel aus beiden Druckmittelquellen der Fall ist, sondern zusätzlich die dritte Wirkfläche des Kolbens der Ventileinrichtung.

Die Erfindung bietet insbesondere den Vorteil, durch die Anordnung eines einfachen zusätzlichen Ventils die dritte Wirkfläche des Kolbens mit dem Druckmittel aus der zweiten Druckmittelquelle oder mit dem Druckmittel aus der ersten Druckmittelquelle beaufschlagen zu können, wobei die Schaltstellung des Ventils abhängig ist von den einander entgegengerichtet auf den Schaltkolben des Ventils einwirkenden Drücken aus der zweiten Druckmittelquelle und der ersten Druckmittelquelle sowie eines den Schaltkolben beaufschlagenden Federelementes. Vorteilhafterweise können Mittel zum Verändern der Federkraft des Federelementes vorgesehen werden. Das zusätzliche Ventil kann als Schieberventil ausgebildet sein, wobei die einander abgewandten Seiten des Ventilschiebers vom Druckmittel aus den unterschiedlichen Druckmittelquellen beaufschlagt werden. Bei einer solchen Ausbildung des Ventils hat der Ventilschieber des Schieberventils gleichzeitig die Funktion des Schaltkolbens.

Der Ventilschieber oder auch das als Schaltkolben ausgebildete bewegliche Ventilglied kann sowohl in einem separaten Gehäuse angeordnet sein, welches an das das kombinierte Einlaß- und Auslaßventil enthaltende Gehäuse angeflanscht ist, als auch in einer Bohrung des das kombinierte Einlaß- und Auslaßventil enthaltenden Gehäuses vorgesehen werden.

Das zusätzliche Ventil ist vorzugsweise oberhalb des Kolbens, d. h., der dritten Wirkfläche des Kolbens gegenüber mit seiner Längsachse quer zur Längsache des Kolbens angeordnet.

Das Ventilglied und der Schaltkolben können in vorteilhafter Weise auch als zwei Bauteile ausgebildet sein, die miteinander in Wirkverbindung stehen, wobei das Ventilglied vom Druckmittel aus der einen Druckmittelquelle und der Schaltkolben entgegengerichtet mit dem Druckmittel aus der anderen Druckmittelquelle beaufschlagbar sind.
Das zusätzliche Ventil kann sowohl bei einem Relaisventil als auch bei einem durchsteuernden Ventil verwendet werden.
Bei einem durchsteuernden Ventil dient das Druckmittel aus der einen Druckmittelquelle gleichzeitig als Steuerdruckmittel und als Arbeitsdruckmittel.

Es ist auch möglich, das zusätzliche Ventil als Wechselventil auszubilden.

Anhand der Zeichnung werden nachfolgend drei Ausführungsbeispiele der Erfindung näher erläutert.

Es zeigen:
- Figur 1: ein erstes Beispiel für ein Relaisventil mit einem als Umschaltventil für den Steuerdruck dienenden zusätzlichen Ventil, wobei das zusätzliche Ventil Teil eines Schaltkolbens ist;
- Figur 2: ein zweites Beispiel für ein Relaisventil mit einem als Umschaltventil für den Steuerdruck dienenden zusätzlichen Ventil
- Figur 3: einen Ausschnitt des Umschaltventils nach Fig. 2 und
- Figur 4: ein durchsteuerndes Ventil mit einem als Umschaltventil für den Steuerdruck dienenden zusätzlichen Ventil, wobei das Umschaltventil den gleichen Aufbau aufweist wie das in Figur 2 gezeigte Umschaltventil.

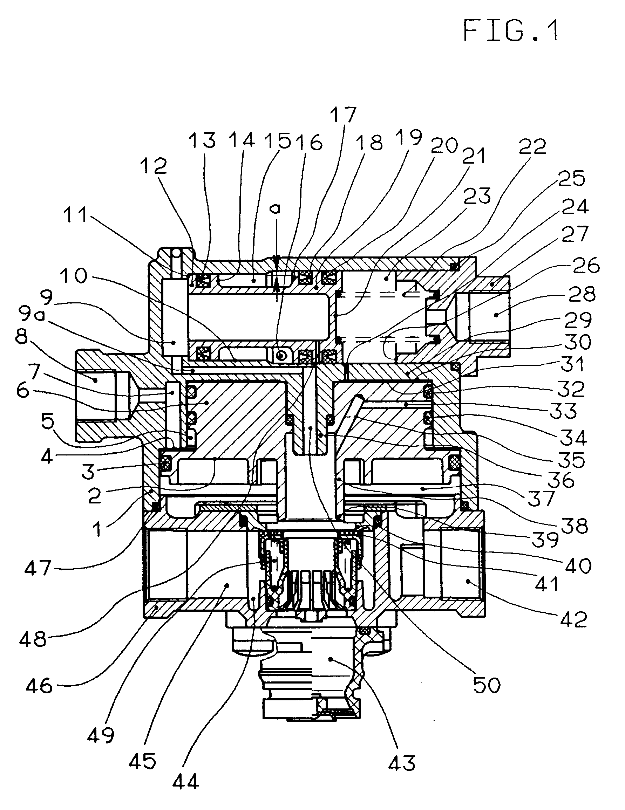

In Figur 1 ist eine als Relaisventil ausgebildete Ventileinrichtung dargestellt, die ein aus einem Gehäuseunterteil (46) und einem Gehäuseoberteil (1) bestehendes Gehäuse (46, 1) aufweist. Das Gehäuseunterteil (46) und das Gehäuseoberteil (1) sind unter Zwischenschaltung eines Dichtringes (47) mittels nicht dargestellter Verbindungsmittel miteinander verbunden.

Im Gehäuseoberteil (1) ist ein als Relaiskolben (6) dienender abgestufter Kolben in Richtung der Längsachse des Gehäuses (46, 1) verschiebbar angeordnet. Der Relaiskolben (6) besitzt eine von einem Verbraucherdruck in einer Arbeitskammer (37) beaufschlagbare erste Wirkfläche (2), eine von einem Steuerdruck aus einer ersten Druckmittelquelle beaufschlagbare, der ersten Wirkfläche (2) entgegengerichtete zweite Wirkfläche (4) und eine von einem Steuerdruck aus einer zweiten Druckmittelquelle beaufschlagbare, der ersten Wirkfläche (2) ebenfalls entgegengerichtete dritte Wirkfläche (31).

Sowohl die zweite Wirkfläche (4) als auch die dritte Wirkfläche (31) des Relaiskolbens (6) sind kleiner als dessen erste Wirkfläche (2). Die Gesamtwirkfläche aus der zweiten Wirkfläche (4) und der dritten Wirkfläche (31) weist eine Größe auf, die annähernd der Größe der ersten Wirkfläche (2) entspricht.

Mittels eines am Relaiskolben (6) angeordneten ersten Dichtringes (3) ist die Arbeitskammer (37) gegen eine erste Steuerkammer (5) abgedichtet. Ein zweiter Dichtring (34) und ein dritter Dichtring (32) dichten die erste Steuerkammer (5) gegen eine zweite Steuerkammer (30) ab.

Über einen Kanal (7) steht die erste Steuerkammer (5) mit einem als erster Steueranschluß (8) dienenden ersten Druckmittelanschluß und über einen zweiten Kanal (24) steht die zweite Steuerkammer (30) mit einem als zweiter Steueranschluß (28) dienenden zweiten Druckmittelanschluß in Verbindung.

Die erste Steuerkammer (5) ist auf diese Art und Weise mit der ersten Druckmittelquelle und die zweite Steuerkammer (30) mit der zweiten Druckmittelquelle verbindbar.

Die Arbeitskammer (37) ist über ein kombiniertes Einlaß- und Auslaßventil (40, 41, 39) in Abhängigkeit von der Stellung des Relaiskolbens (6) mit einer Druckmitteleingangskammer (44) oder mit einem zur Atmosphäre hinführenden Druckmittelauslaß (43) verbindbar oder gegen beide absperrbar.

Die Druckmitteleingangskammer (44) steht über einen Druckmitteleingang (45) mit einem Druckmittelvorratsbehälter in Verbindung. Die Arbeitskammer (37) ist über einen Druckmittelausgang (42) mit einem nicht dargestellten Verbraucher verbunden.

Der Relaiskolben (6) weist einen zentrisch angeordneten rohrförmigen Fortsatz (38) auf, der sich in die Arbeitskammer (37) hineinerstreckt. An den rohrförmigen Fortsatz (38) schließt eine den Relaiskolben (6) durchdringende Bohrung an, die zur Aufnahme eines zapfenartigen Teils (36) dient, welches an einer der dritten Wirkfläche (31) des Relaiskolbens (6) gegenüber angeordneten Wand (29) des Gehäuseoberteils (1) vorgesehen ist. Das zapfenartige Teil (36) erstreckt sich auf einem Teil seiner Länge paßgenau in den dem rohrförmigen Fortsatz (38) abgewandten Bereich der Bohrung des Relaiskolbens (6) hinein. Zwischen der äußeren Mantelfläche des zapfenartigen Teiles (36) und der die Bohrung im Relaiskolben (6) begrenzenden Wand ist ein Dichtring (35) angeordnet.

Die Wand (29) im Gehäuseoberteil (1) begrenzt mit ihrer der dritten Wirkfläche (31) des Relaiskolbens (6) abgewandten Seite eine im wesentlichen quer zur Längsachse des Gehäuses (46, 1) verlaufende Gehäusebohrung (10).

In der Gehäusebohrung (10) ist ein Schaltkolben (19) in Richtung der Längsachse der Gehäusebohrung (10) verschiebbar angeordnet.

Der Schaltkolben (19) unterteilt die Gehäusebohrung (10) in eine erste Kammer (15) und in eine zweite Kammer (23). Die erste Kammer (15) ist über einen im Gehäuseoberteil vorgesehenen Kanal (16) und den mit diesem verbundenen ersten Steueranschluß (8) mit der ersten Druckmittelquelle und die zweite Kammer (23) ist über den zweiten Steueranschluß (28) mit der zweiten Druckmittelquelle verbindbar.

Der Schaltkolben (19) wird von einer Feder (22), die sich an einem den zweiten Steueranschluß (28) enthaltenden Anschlußstutzen (27) abstützt, in Richtung auf die erste Kammer (15) zu beaufschlagt. Mittels der Feder (22) und einem auf der der Feder (22) abgewandten Seite des Schaltkolbens (19) im Gehäuseoberteil angeordneten ersten Anschlages (11) für den Schaltkolben (19) wird dieser in einer ersten definierten Stellung gehalten.

Ein am Anschlußstutzen (27) angeordneter, sich in die zweite Kammer (23) hineinerstreckender, umlaufender Vorsprung dient als ein zweiter Anschlag (26) für den Schaltkolben (19), wenn dieser gegen die Kraft der Feder (22) in Richtung auf die zweite Kammer (23) zu bewegt wird. Mittels des zweiten Anschlages (26) wird eine zweite definierte Stellung des Schaltkolbens (19) sichergestellt.

Der Schaltkolben (19) weist auf seinem Umfang einen ersten Dichtring (13), einen zweiten Dichtring (18) und einen dritten Dichtring (20) auf. Jeder dieser Dichtringe liegt dichtend an der die Gehäusebohrung (10) begrenzenden Wand an.

Die erste Kammer (15) wird, in Richtung der Längsachse des Schaltkolbens (19) gesehen, von dem ersten Dichtring (13) und dem zweiten Dichtring (18) begrenzt, die in je einer Umfangsnut des Schaltkolbens (19) angeordnet sind. Da der Durchmesser des Schaltkolbens (19) und somit auch der Durchmesser der den Schaltkolben (19) aufnehmenden Gehäusebohrung (10) im Bereich des zweiten Dichtringes (18) größer ist als im Bereich des ersten Dichtringes (13), ist auch die Ringfläche (17) des Teiles des Schaltkolbens (19), welcher den zweiten Dichtring (18) aufnimmt, größer als die Ringfläche (14) des Teiles des Schaltkolbens (19), der den ersten Dichtring (13) aufnimmt.

Durch diese Ausbildung der Gehäusebohrung (10) und des in dieser geführten Schaltkolbens (19) wird am Schaltkolben (19) eine Wirkfläche (a) gebildet, die bei Einsteuerung von Druckmittel in die erste Kammer (15) und bei gleichzeitiger druckentlasteter zweiter Kammer (23) eine Bewegung des Schaltkolbens (19) gegen die Kraft der Feder (22) in Richtung auf die zweite Kammer (23) zu ermöglicht.

Der dritte Dichtring (20) ist ebenfalls in einer Umfangsnut des den größeren Durchmesser aufweisenden Teiles des Schaltkolbens (19) angeordnet. Mittels des dritten Dichtringes (20) und des zweiten Dichtringes (18) sind die zweite Kammer (23) und die erste Kammer (15) gegeneinander abgedichtet.

Zwischen den die beiden Kammern (15) und (23) gegeneinander abdichtenden Dichtringen (18) und (20) ist ein die Kolbenwand durchdringender Kanal (48) vorgesehen. Der Kanal (48) ist über den Innenraum des Schaltkolbens (19) mit einem an die Gehäusebohrung (10) anschließenden Raum (9) verbunden, der wiederum über einen Kanal (9 a) mit einer im zapfenartigen Vorsprung (36) der Gehäusewand (29) angeordneten Bohrung (50) verbunden ist, die eine Verbindung zum Druckmittelauslaß (43) des Gehäuses (1, 46) bildet.

Durch diese Maßnahme wird bei einem Defekt an einem der Dichtringe (18) bzw. (20) verhindert, daß sich die Drücke aus der ersten Kammer (15) und der zweiten Kammer (23) vermischen.
Wäre nur einer der Dichtringe (18) bzw. (20) zur Abdichtung der beiden Kammern (15) und (23) gegeneinander vorhanden, so wäre ein Vermischen der Drücke bei einem Defekt an diesem Dichtring nicht zu verhindern.

In gleicher Weise wird ein Vermischen der Drücke aus der ersten Steuerkammer (5) und der zweiten Steuerkammer (30) durch die Anordnung eines den Relaiskolben (6) durchdringenden Kanals (33) verhindert, der einerseits zwischen den beiden Dichtringen (32) und (34) des Relaiskolbens (6) die Mantelfläche desselben durchdringt und andererseits in der mit der Atmosphäre verbundenen Bohrung des Relaiskolbens (6) mündet.

Der den zweiten Steueranschluß (28) aufweisende Anschlußstutzen (27) dient gleichzeitig als Deckelteil für die den Schaltkolben (19) aufnehmende Gehäusebohrung (10) und ist unter Zwischenschaltung eines Dichtringes (25) in diese eingesetzt.

Der in der Gehäusewand (29) angeordnete Kanal (24) bildet zusammen mit dem Schaltkolben (19) sowie mit dem zweiten Dichtring (18) und dem dritten Dichtring (20) des Schaltkolbens (19) ein zusätzliches Ventil (19, 18, 20, 24), über welches die zweite Steuerkammer (30) in Abhängigkeit von der Stellung des Schaltkolbens (19) über die zweite Kammer (23) und den zweiten Steueranschluß (28) mit der zweiten Druckmitelquelle oder über die erste Kammer (15), den Kanal (16) und den ersten Steueranschluß (8) mit der ersten Druckmittelquelle verbindbar ist.

Der Schaltkolben (19) bildet somit ein bewegliches Ventilglied für das zusätzliche Ventil (19, 18, 20, 24) der Ventileinrichtung.

Die Funktion der im vorstehenden beschriebenen Ventileinrichtung wird nachstehend näher erläutert.

Es wird angenommen, daß die Ventileinrichtung in der Bremsanlage eines Fahrzeugs derart angeordnet ist, daß der Druckmitteleingang (45) mit einem Druckmittelvorratsbehälter verbunden ist und der Druckmittelausgang (42) mit den Bremszylindern der Vorderachse des Fahrzeugs in Verbindung steht.
Der erste Steueranschluß (8) ist mit einem Bremsventil und der zweite Steueranschluß (28) ist mit dem Hinterachsbremskreis des Fahrzeugs verbunden, und zwar mit dem Bereich des Hinterachsbremskreises, der von einem achslastabhängigen Bremskraftregler zu den Bremszylindern der Hinterachse des Fahrzeugs führt.
Solange nicht gebremst wird, befindet sich der Relaiskolben (6) in der gezeigten Stellung. Das Einlaßventil (40, 41) ist geschlossen (Ventilkörper (41) wird von einer Feder (49) auf dem Ventilsitz (40) gehalten) und das Auslaßventil (39, 41) ist geöffnet.
Die Arbeitskammer (37) sowie die erste Steuerkammer (5) und die zweite Steuerkammer (30) sind drucklos.

Der Schaltkolben (19) für das zusätzliche Ventil (24, 18, 20, 19) wird von der Feder (22) in seiner linken Endlage gehalten, wobei er mit seiner der Feder (22) abgewandten Stirnseite (12) am ersten Anschlag (11) anliegt.

In dieser Position des Schaltkolbens (19) sperrt das als Schaltkolben (19) ausgebildete bewegliche Ventilglied (18, 20, 19) die mit dem ersten Steueranschluß (8) verbundene erste Kammer (15) gegen die zweite Steuerkammer (30) ab. Die zweite Steuerkammer (30) ist über den Kanal (24) des zusätzlichen Ventils (18, 20, 19, 24) mit der zweiten Kammer (23) und somit mit dem zweiten Steueranschluß (28) verbunden.

Wird ein Bremsvorgang eingeleitet, so strömt vom nicht dargestellten Bremsventil als Steuerdruckmittel dienendes Druckmittel durch den ersten Steueranschluß (8) und den Kanal (7) in die erste Steuerkammer (5) sowie durch den die erste Kammer (15) des zusätzlichen Ventils (18, 20, 24, 19) mit dem ersten Steueranschluß (8) verbindenden Kanal (16) in die erste Kammer (15).
Gleichzeitig baut sich über den zweiten Steueranschluß (28), die zweite Kammer (23) und den Kanal (24) des zusätzlichen Ventils (18, 20, 24, 19) achslastabhängig geregelter Druck aus dem Hinterachsbremskreis in der zweiten Steuerkammer (30) auf.

Der das bewegliche Ventilglied bildende Schaltkolben (19) des zusätzlichen Ventils (18, 20, 24, 19) verbleibt in seiner Position, da die vom Druckmittel in der ersten Kammer (15) beaufschlagte Wirkfläche (a) des Schaltkolbens (19) kleiner ist als die dieser entgegengerichtete, vom Druck in der zweiten Kammer (23) beaufschlagte Wirkfläche (21) des Schaltkolbens (19) und zusätzlich die Feder (22) den Schaltkolben (19) in der gleichen Richtung belastet wie der Druck in der zweiten Kammer (23).

Die einander entgegengerichteten Wirkflächen (a) und (21) des Schaltkolbens (19) müssen so ausgelegt sein, daß bei gleichzeitiger Einsteuerung von Druckmittel in die Kammern (15) und (23) der Schaltkolben (19) in seiner Ruheposition verbleibt.

Durch den sich in der ersten Steuerkammer (5) aufbauenden, auf die zweite Wirkfläche (4) einwirkenden Druck und den sich in der zweiten Steuerkammer (30) aufbauenden, auf die dritte Wirkfläche (31) einwirkenden Druck wird der Relaiskolben (6) in Richtung auf die Arbeitskammer (37) zu verschoben. Das Auslaßventil (39, 41) schließt und das Einlaßventil (40, 41) wird in die Offenstellung gebracht.

Von der Druckmitteleingangskammer (44) strömt durch das geöffnete Einlaßventil (40, 41) des kombinierten Einlaß- und Auslaßventils (40, 41, 39) Druckmittel in die Arbeitskammer (37) und von dieser weiter durch den Druckmittelausgang (42) zu den Bremszylindern der Vorderachse des Fahrzeugs.
Durch den sich in der Arbeitskammer (37) aufbauenden und die erste Wirkfläche (2) des Relaiskolbens (6) beaufschlagenden Druck wird der Relaiskolben (6) nach oben, in Richtung auf die erste Steuerkammer (5) und die zweite Steuerkammer (30) zu verschoben.

Hat die Kraft des auf die erste Wirkfläche (2) einwirkenden Verbraucherdruckes einen Wert erreicht, der der Kraft der entgegengerichtet auf die zweite Wirkfläche (4) und die dritte Wirkfläche (31) einwirkenden Steuerdrücke entspricht, so gelangt das Einlaßventil (40, 41) des kombinierten Einlaß- und Auslaßventils (40, 41, 39) in die Schließstellung. Eine Abschlußstellung ist erreicht.

In den Bremszylindern der Vorderachse des Fahrzeugs herrscht jetzt ein Druck, der bestimmt ist durch den vom Bremsventil kommenden Druck, den vom Hinterachsbremskreis kommenden, achslastabhängig geregelten Druck sowie der ersten Wirkfläche (2) und der dieser entgegengerichteten zweiten Wirkfläche (4) und dritten Wirkfläche (31) des Relaiskolbens (6).

Soll der Bremsvorgang beendet werden, so werden die erste Steuerkammer (5) und die zweite Steuerkammer (30) über die der Ventileinrichtung vorgeschalteten Ventile (Bremsventil; achslastabhängiger Bremskraftregler) entlüftet. Bei diesem Vorgang werden zwangsläufig auch die erste Kammer (15) und die zweite Kammer (23) des zusätzlichen Ventils (18, 20, 24, 19) mit entlüftet.

Fällt der Druck des Hinterachsbremskreises (Steuerdruck am Steueranschluß (28)) aus, so wird bei einem Bremsvorgang der Schaltkolben (19) vom Druckmittel in der ersten Kammer (15) des zusätzlichen Ventils (18, 20, 24, 19) gegen die Kraft der Feder (22) in Richtung auf die zweite Kammer (23) zu verschoben, und zwar so weit, bis er am zweiten Anschlag (26) zur Anlage kommt.

Das zusätzliche Ventil (18, 20, 24, 19) sperrt jetzt die zweite Steuerkammer (30) gegen die mit dem zweiten Steueranschluß (28) verbundene zweite Kammer (23) ab und verbindet die zweite Steuerkammer (30) mit der mit dem ersten Steueranschluß (8) in Verbindung stehenden ersten Kammer (15).

Die dritte Wirkfläche (31) des Relaiskolbens (6) wird jetzt also auch mit dem Druckmittel aus der ersten Druckmittelquelle (Bremsventil) beaufschlagt.
Vom Relaisventil wird jetzt ein Druck ausgesteuert, der abhängig ist von der ersten Wirkfläche (2), der zweiten Wirkfläche (4), der dritten Wirkfläche (31) des Relaiskolbens (6) sowie von dem die zweite Wirkfläche (4) und die dritten Wirkfläche (31) beaufschlagenden Steuerdruck aus der ersten Druckmittelquelle (Bremsventil).

Da vorzugsweise die Gesamtwirkfläche aus der zweiten Wirkfläche (4) und der dritten Wirkfläche (31) des Relaiskolbens die gleiche Größe aufweist wie die erste Wirkfläche (2) des Relaiskolbens, wird vom Relaisventil ein Druck ausgesteuert im Verhältnis von 1:1 von Steuerdruck zu Verbraucherdruck.
Man erkennt, daß der Schaltkolben (19) nur bei Ausfall des Druckes am Steueranschluß (28) aus seiner Ruhestellung heraus bewegt wird.

Was die Feder (22) betrifft, so kann deren Kraft mit nicht dargestellten Mitteln verstellt werden. Die Einstellmittel für die Federkraft können z. B. von dem in das Gehäuse des zusätzlichen Ventils eingeschraubten Anschlußstutzen (27) gebildet werden.

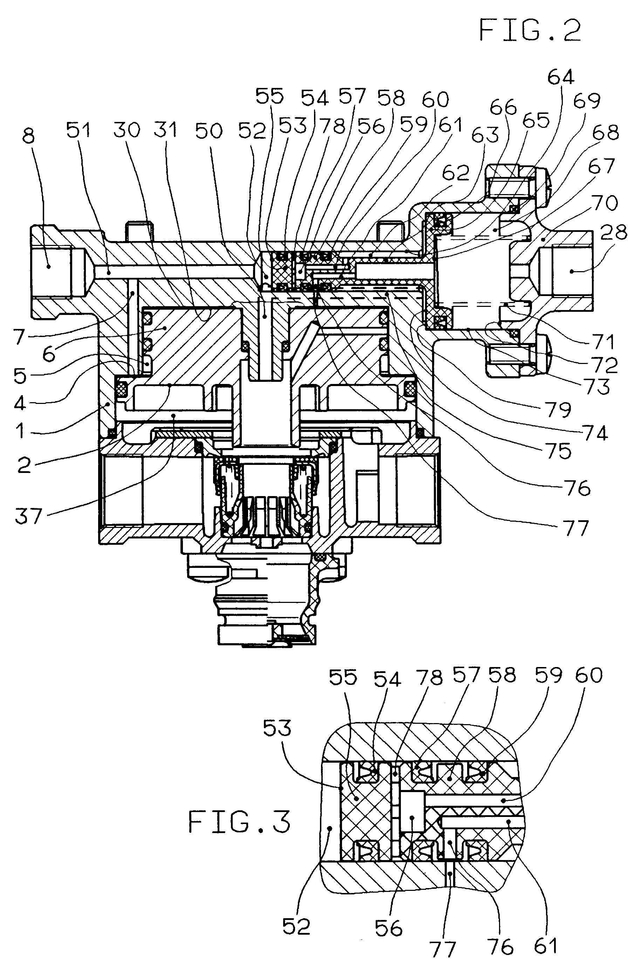

Figur 2 zeigt ein weiteres Beispiel für ein Relaisventil, welches den gleichen Aufbau aufweist wie das in Figur 1 dargestellte und beschriebene Relaisventil, wobei das Umschaltventil als Schieberventil anders ausgebildet ist.

Der besseren Übersicht halber wird nur auf die Teile des Relaisventils Bezug genommen, die zum Verständnis der Erfindung erforderlich sind. Die den in Figur 1 gezeigten Bauteilen gleichen Bauteile sind der besseren Übersicht halber mit gleichen Bezugszeichen versehen.

In einem Gehäuseoberteil (1) eines Relaisventils ist ein Relaiskolben (6) in Richtung der Längsachse des Ventilgehäuseoberteiles (1) abgedichtet verschiebbar angeordnet. Der Relaiskolben (6) weist eine von einem Druck in einer Arbeitskammer (37) beaufschlagbare erste Wirkfläche (2), eine von einem Steuerdruckmittel in einer ersten Steuerkammer (5) beaufschlagbare, der ersten Wirkfläche (2) entgegengerichtete zweite Wirkfläche (4) und eine von einem Steuerdruckmittel in einer zweiten Steuerkammer (30) beaufschlagbare dritte Wirkfläche (31), die der ersten Wirkfläche (2) ebenfalls entgegengerichtet ist, auf.

Die erste Steuerkammer (5) ist über einen Kanal (7) mit einem ersten Steueranschluß (8) verbunden, der über eine nicht dargestellte Ventileinrichtung, wie z. B. ein Bremsventil, mit einer als Steuerdruckmittelquelle dienenden ersten Druckmittelquelle verbindbar ist. Die zweite Steuerkammer (30) ist über ein noch zu beschreibendes zusätzliches Ventil mit dem ersten Steueranschluß (8) oder mit dem zweiten Steueranschluß (28) verbindbar, der über eine nicht dargestellte Regelventileinrichtung, wie z. B. einen achslastabhängigen Bremskraftregler, mit einer als zweite Steuerdruckmittelquelle dienenden Druckmittelquelle verbindbar ist.

Die zweite Steuerdruckmittelquelle ist zum Beispiel der dem achslastabhängigen Bremskraftregler nachgeschaltete Teil eines Hinterachsbremskreises eines Fahrzeugs.

Das Gehäuseoberteil (1) des Relaisventils weist eine quer zu seiner Längsachse verlaufende abgestufte Gehäusebohrung (64, 73) auf. In dem den größeren Durchmesser aufweisenden Teil (73) der abgestuften Gehäusebohrung (64, 73) ist ein Schaltkolben (65) mittels eines Dichtringes (66) abgedichtet verschiebbar angeordnet. Der Schaltkolben (65) weist einen sich in den den geringeren Durchmesser aufweisenden Teil (64) der abgestuften Gehäusebohrung (73, 64) hineinerstreckenden, ebenfalls abgestuften Fortsatz (63, 58) auf. Der abgestufte Fortsatz (63, 58) wird von dem den größeren Durchmesser aufweisenden Bereich (58) in dem den geringeren Durchmesser aufweisenden Bereich (64) der abgestuften Gehäuseausnehmung (73, 64) geführt.
Auf dem Umfang des den größeren Durchmesser aufweisenden Teiles (58) des Fortsatzes (63, 58) sind ein erster Dichtring (59) und ein zweiter Dichtring (57) gelagert, welche dichtend an der den Bereich (64) der Gehäusebohrung (73, 64) begrenzenden Wand anliegen. An seiner freien Stirnseite weist der Fortsatz (63, 58) mehrere sich in axialer Richtung erstreckende Vorsprünge (78) auf, an welchen ein kolbenartiges Teil (55) anliegt. Das kolbenartige Teil ist in Richtung der Längsachse der Gehäusebohrung (64) mittels eines Dichtringes (54) abgedichtet verschiebbar angeordnet. Mit seiner dem Fortsatz (63, 58) abgewandten Seite begrenzt das kolbenartige Teil (55) eine erste Kammer (52), die über einen im Gehäuseoberteil (1) vorgesehenen Kanal (51) mit dem ersten Steueranschluß (8) verbunden ist.

Der den größeren Durchmesser aufweisende Teil (73) der Gehäusebohrung (73, 64) dient, wie bereits erwähnt, zur Führung des Schaltkolbens (65). Dieser Teil der Gehäusebohrung (73, 64) ist mit dem zweiten Steueranschluß (28) verbunden und dient als zweite Kammer, über welche einerseits der Schaltkolben (65) mit Druckmittel beaufschlagbar und andererseits in die zweite Steuerkammer (30) Druckmittel einsteuerbar ist.

Der Schaltkolben (65) wird von einer Feder (71), die sich an einem die Gehäusebohrung (73, 64) verschließenden und den zweiten Steueranschluß (28) enthaltenden Deckel (70) abstützt, in Richtung auf die erste Kammer (52) zu beaufschlagt. Zwischen einem sich in die Kammer (68) hinein erstreckenden umlaufenden Vorsprung des Deckels (70) und der den Teil (73) der Gehäusebohrung (73, 64) begrenzenden Wandung ist ein Dichtring (69) angeordnet.

Der Schaltkolben (65) und der mit diesem verbundene Fortsatz (63, 58) weist eine in Richtung der Längsachse des Schaltkolbens (65) bzw. des Fortsatzes (63, 58) verlaufende Bohrung (61) auf, die nach Art einer Sackbohrung ausgebildet ist. An die Sackbohrung (61) schließt eine quer zur Längsachse des Fortsatzes (63, 58) verlaufende, den Teil (58) durchdringende weitere Bohrung (76) an. Die Bohrung (76) ist mit einem die Gehäusewand in Richtung auf die zweite Steuerkammer (30) zu durchdringenden Kanal (77) zur Deckung bringbar. Sie ist so in dem Teil (58) des Fortsatzes (63, 58) angeordnet, daß sie zwischen dem zweiten Dichtring (57) und dem dritten Dichtring (59) gelegen ist.
Im Fortsatz (63, 58) ist eine weitere Bohrung (60) vorgesehen, die in einem zwischen dem kolbenartigen Teil (55) und der diesem zugewandten Seite des Fortsatzes (63, 58) angeordneten Raum (56) beginnend zur äußeren Mantelfläche des Fortsatzes (63, 58) hin verläuft und in einem Ringraum (62), der von der äußeren Mantelfläche des Teiles (63) des Fortsatzes (63, 58) und der die Gehäusebohrung (64) begrenzenden Wandung begrenzt wird, mündet. Der Ringraum (62) steht mit einem Raum (74) in Verbindung, der von der dem Raum (68) abgewandten Seite des Schaltkolbens (65) begrenzt wird.
Über einen Gehäusekanal (75) und einen weiteren Kanal (50), der in einem zapfenartigen Vorsprung der Gehäusewand vorgesehen ist, steht der Raum (74) ständig mit dem Druckmittelauslaß der Ventileinrichtung in Verbindung.

Der Fortsatz (63, 58) des Schaltkolbens (65), der kolbenartige Körper (55) sowie der erste Dichtring (54), der zweite Dichtring (57) und der dritte Dichtring (59) bilden einen Ventilschieber, der mit der Bohrung (76) und mit dem in der Gehäusewand vorgesehenen Kanal (77) ein Schieberventil bildet. Zur Betätigung des Schieberventils dient einerseits der Schaltkolben (65), der auf seiner der zweiten Kammer (68) zugewandten Seite eine vom zweiten Steueranschluß (28) kommenden Steuerdruckmittel beaufschlagbare Wirkfläche (67) aufweist und andererseits der kolbenartige Körper (55), der eine der Wirkfläche (67) des Schaltkolbens (65) entgegengerichtete Wirkfläche (53) besitzt, die mit dem vom ersten Steueranschluß (8) kommenden Steuerdruckmittel beaufschlagbar ist.

An der den Raum (74) begrenzenden Stirnwand ist ein erster Anschlag (79) und an dem in den Raum (68) sich hineinerstreckenden umlaufenden Vorsprung des Deckels (70) ist ein zweiter Anschlag (72) für den Schaltkolben (65) vorgesehen. Diese beiden Anschläge (79) und (72) ermöglichen zwei definierte Schaltstellungen des Schaltkolbens (65) und somit des Schieberventils.

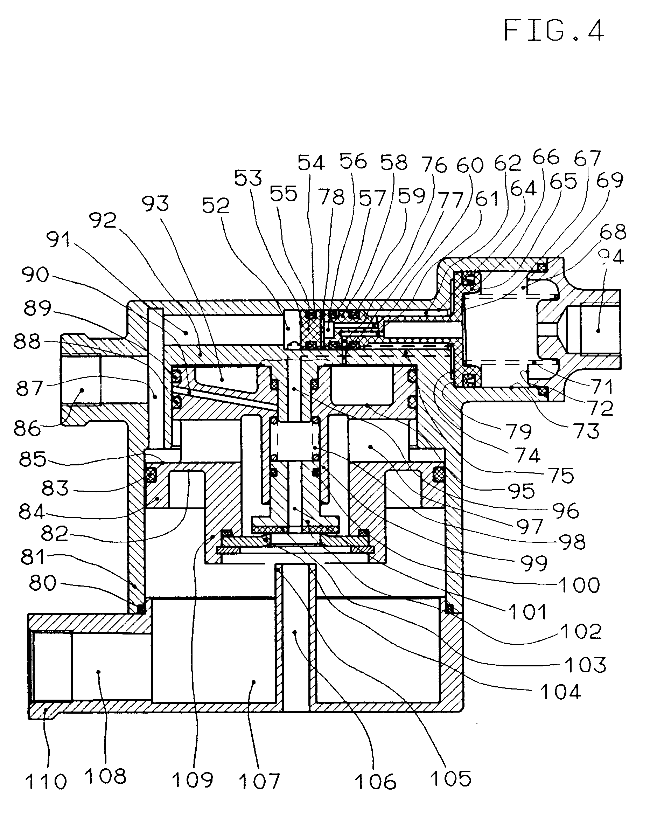

In Figur 3 sind lediglich der den größeren Durchmesser aufweisende Teil (58) des Fortsatzes (63, 58) des Schaltkolbens (65) sowie der mit diesem in Wirkverbindung stehende kolbenartige Körper (55) dargestellt. Die in Figur 3 gezeigten Bauteile sind gleich den in Figur 2 gezeigten Bauteilen und aus diesem Grunde mit den gleichen Bezugszeichen versehen. Der besseren Übersicht halber ist dieser Ausschnitt des Schieberventils im Maßstab von 1:2 dargestellt.

Nachfolgend wird die Funktion der im vorstehenden beschreibenen Ventileinrichtung näher erläutert.

In Figur 2 ist die Ventileinrichtung in einer Stellung dargestellt, in welcher die Arbeitskammer (37), die erste Steuerkammer (5), die zweite Steuerkammer (30) sowie die erste Kammer (52) und die zweite Kammer (68) des zusätzlichen Ventils drucklos sind. Der Schaltkolben (65) und somit auch das Schieberventil werden von der Feder (71) in einer Stellung gehalten, in welcher die zweite Steuerkammer (30) über den Kanal (77) und das Schieberventil sowie die Kammer (68) mit dem zweiten Steueranschluß (28) verbunden ist.

Wird gleichzeitig über den ersten Steueranschluß (8) Steuerdruckmittel in die erste Steuerkammer (5) und in die erste Kammer (52) des zusätzlichen Ventils sowie über den zweiten Steueranschluß (28), die Kammer (68), die Bohrungen (61) und (76) des Schieberventils und den Kanal (77) Steuerdruckmittel in die zweite Steuerkammer (30) eingesteuert, so wird mittels des Relaiskolbens (6) das kombinierte Einlaß- und Auslaßventils des Relaisventils betätigt.

Da die am kolbenartigen Körper (55) vorgesehene Wirkfläche (53) des Schieberventils kleiner ausgebildet ist als die am Schaltkolben (65) vorgesehene Wirkfläche (67) verbleibt der Schaltkolben (65) und somit auch das Schieberventil in seiner ursprünglichen Stellung.

Die einander entgegengerichteten Wirkflächen (53) und (67) müssen so ausgelegt sein, daß bei gleichzeitiger Einsteuerung von Druckmittel in die Kammern (52) und (68) der kolbenartige Körper (55) und der Schaltkolben (65) in ihrer Ruheposition verbleiben.

Fällt der Steuerdruck am zweiten Steueranschluß (28) aus, so wird das Schieberventil mit dem Schaltkolben (65) vom Steuerdruckmittel in der ersten Kammer (52) gegen die Kraft der Feder (71) in Richtung auf die zweite Kammer (68) zu verschoben, und zwar so weit, bis der Schaltkolben (65) am zweiten Anschlag (72) zur Anlage kommt. Die zweite Kammer (68) ist jetzt gegen die zweite Steuerkammer (30) abgesperrt, und die erste Kammer (52) ist mit der zweiten Steuerkammer (30) verbunden. Die die zweite Steuerkammer (30) begrenzende dritte Wirkfläche (31) des Relaiskolbens wird jetzt mit dem Steuerdruckmittel aus der gleichen Steuerdruckmittelquelle beaufschlagt wie die die erste Steuerkammer (5) begrenzende zweite Wirkfläche (4) des Relaiskolbens (6).

Da die vom Steuerdruckmittel beaufschlagte Gesamtwirkfläche aus der die zweite Steuerkammer (30) begrenzenden dritten Wirkfläche (31) und der die erste Steuerkammer (5) begrenzenden zweiten Wirkfläche (4) annähernd die gleiche Größe aufweist wie die vom Verbraucherdruck in der Arbeitskammer (37) beaufschlagte erste Wirkfläche (2) des Relaiskolbens (6), wird vom Relaisventil ein Druck ausgesteuert, der ein Verhältnis von 1:1 von Steuerdruck zu Verbraucherdruck aufweist.

Figur 4 zeigt ein durchsteuerndes Ventil, welches ein Gehäuseunterteil (110) und ein Gehäuseoberteil (81) aufweist. Das Gehäuseunterteil (110) und das Gehäuseoberteil (81) sind unter Zwischenschaltung eines Dichtringes (80) miteinander verbunden.
Im abgestuft ausgebildeten Gehäuseoberteil (81) ist ein Stufenkolben (84) mittels Dichtringen (83, 88 und 89) in Richtung der Längsachse des Gehäuses (110, 81) abgedichtet verschiebbar angeordnet.

Der Kolben (84) begrenzt mit einer ersten Wirkfläche (82) eine Arbeitskammer (107), mit einer der ersten Wirkfläche (82) entgegengerichteten zweiten Wirkfläche (85) eine erste Steuerkammer (97) und mit einer ebenfalls der ersten Wirkfläche (82) entgegengerichteten dritten Wirkfläche (95) eine zweite Steuerkammer (93). Die Arbeitskammer (107) ist über einen Druckmittelausgang (108) mit einem Verbraucher verbunden. Die erste Steuerkammer (97), welche gleichzeitig die Funktion einer Druckmitteleingangskammer hat, steht über einen Kanal (87) und einen ersten Druckmittelanschluß (86) mit einer nicht dargestellten Ventileinrichtung in Verbindung, die wiederum mit einer Druckmittelquelle verbunden ist.

Der Kolben (84) weist auf seiner der Arbeitskammer (107) zugewandten Seite einen rohrförmigen Fortsatz (109) auf, an dessen freiem Ende ein Ventilsitz (104) angeordnet ist. Der Innenraum des rohrförmigen Fortsatzes (109) steht mit der ersten Steuerkammer (97) und somit auch mit der Druckmitteleingangskammer in Verbindung. In den rohrförmigen Fortsatz (109) erstreckt sich ein rohrförmiges Führungsteil (99) hinein, in welchem ein Ventilglied (102) mittels eines Dichtringes (100) abgedichtet in Richtung der Längsachse des Führungsteiles (99) verschiebbar angeordnet ist. Das Ventilglied (102) weist auf seiner dem Ventilsitz (104) zugewandten Seite einen Dichtkörper (103) auf. Mittels einer im Führungsteil (99) angeordneten Feder (98) wird das Ventilglied (102) mit dem Dichtkörper (103) auf dem Ventilsitz (104) gehalten.

An dem Boden des unteren Gehäuseteiles (110) ist ein sich in Richtung auf das Ventilglied (102) zu erstreckender Vorsprung angeordnet, der einen in Richtung seiner Längsachse verlaufenden Durchlaß (106) aufweist. Über den Durchlaß (106) ist die Arbeitskammer (107) mit der Atmosphäre bzw. mit einem Rücklauf verbindbar. Auf seiner dem Ventilglied (102) zugewandten Seite weist der Vorsprung einen weiteren Ventilsitz (105) auf.
Das Ventilglied (102) bildet zusammen mit dem ersten Ventilsitz (104) ein Einlaßventil und mit dem zweiten Ventilsitz (105) ein Auslaßventil.

Das Ventilglied (102) weist einen in Richtung seiner Längsachse verlaufenden Durchlaß (101) auf, der über den Innenraum des Führungsteiles (99) sowie einen an diesen anschließenden Kanal (96) und einen mit diesem verbundenen weiteren Kanal (75) mit dem von der Rückseite eines Schaltkolbens (65) für ein zusätzliches Ventil begrenzten Raum (74) verbunden ist.

Zwischen dem zweiten Dichtring (88) und dem dritten Dichtring (89) des Kolbens (84) ist ein den Kolben (84) durchdringender Kanal (90) vorgesehen, der ausgehend von der äußeren Mantelfläche des Kolbens (84) sich bis in Innenraum des Führungsteiles (99) hineinerstreckt. Über den Kanal (90) wird bei Defektwerden des die erste Steuerkammer (97) bzw. des die Druckmitteleingangskammer abdichtenden Dichtringes (88) oder bei Defektwerden des die erste Steuerkammer (97) abdichtenden Dichtringes (89) das Druckmittel aus der ersten Steuerkammer (97) bzw. aus der zweiten Steuerkammer (93) zur Atmosphäre hin abgeleitet, so daß ein Vermischen der Drücke aus der ersten Steuerkammer (97) bzw. Druckmitteleingangskammer und der zweiten Steuerkammer (93) verhindert wird.
In einer Gehäusebohrung (91), die quer zur Längsachse des Gehäuses (79), (81) verläuft, ist ein quer zu seiner Längsachse geteilt ausgebildeter Ventilschieber (55, 58) angeordnet, wobei das Teil (58) des Ventilschiebers mit dem Schaltkolben (65) baulich vereinigt ist. Das Teil (55) des Ventilschiebers (55, 58) ist als ein kolbenartiges Teil ausgebildet, welches mit seiner dem Teil (58) zugewandten Stirnseite an Vorsprüngen (78) des Teiles (58) anliegt.

Von der dem Schaltkolben abgewandten Seite (53) des kolbenartigen Teiles (55) des Ventilschiebers (55, 58) wird eine erste Kammer (52) begrenzt, die über den Kanal (91) mit dem ersten Steueranschluß (86) in Verbindung steht. Die dem Ventilschieber (55, 58) abgewandte Seite (67) des Schaltkolbens (65) begrenzt eine zweite Kammer (68), die mit einem zweiten Steueranschluß (94) verbunden ist.

Der Ventilschieber (55, 58) weist auf seinem Umfang einen ersten Dichtring (54), einen zweiten Dichtring (57) und einen dritten Dichtring (59) auf. Zwischen dem zweiten Dichtring (57) und dem dritten Dichtring (59) ist ein den Teil (58) des Ventilschiebers quer zu seiner Längsachse durchdringender Kanal (76) vorgesehen, der mit einem Kanal (77) zur Deckung bringbar ist. Der Kanal (77) durchdringt eine Wand (92), welche die Gehäusebohrung (91) und die zweite Steuerkammer (93) voneinander trennt.
An den Kanal (76) des Ventilschiebers (55, 58) schließt ein im Teil (58) des Ventilschiebers (55, 58) vorgesehener Kanal (61) an, der in die zweite Kammer (68) mündet. Ein weiterer Kanal (60) ist ebenfalls im Teil (58) des Ventilschiebers (55, 58) angeordnet.

Zwischen dem Teil (58) und dem Teil (55) des Ventilschiebers (58, 55) ist ein Raum (56) vorgesehen, welcher über den Kanal (60) mit einem Ringraum (62) in Verbindung steht, der mit dem vom Schaltkolben (65) begrenzten Raum (74) verbunden ist, sowie die Gehäusekanäle (75) und (96) mit der Atmosphäre verbunden ist.

Der Schaltkolben (65) trägt auf seinem Umfang einen Dichtring (66), welcher dichtend an der Wand des erweiterten Teiles der Gehäusebohrung (91) anliegt. Ein im Raum (74) vorgesehener erster Anschlag (79) und ein an dem die Gehäusebohrung verschließenden Deckel vorgesehener zweiter Anschlag (72) ermöglichen zwei definierte Stellungen des Schaltkolbens (65) und somit auch zwei definierte Stellungen des zusätzlichen Ventils. Eine Feder (71) stützt sich am Deckel ab und beaufschlagt den Schaltkolben (65) in Richtung auf die erste Kammer (52) des zusätzlichen Ventils zu.

Zwischen dem Deckel und der die zweite Kammer (68) begrenzenden Wand ist ein Dichtring (69) angeordnet.

Die Funktion der im vorstehenden beschriebenen Ventileinrichtung wird nachfolgend näher erläutert.

Der erste Steueranschluß (86), der gleichzeitig Druckmittelanschluß für die Druckmitteleingangskammer (97) ist, ist z. B. an ein Bremsventil angeschlossen. Der zweite Steueranschluß (94) steht mit einem achslastabhängigen Bremskraftregler in Verbindung und der Druckmittelausgang (108) ist mit den Bremszylindern der Vorderachse eines Fahrzeugs verbunden.

Wird das Bremsventil betätigt, so strömt Druckmittel durch den ersten Steueranschluß (86) und den Kanal (87) in die erste Steuerkammer (97) und somit in die Druckmitteleingangskammer. Gleichzeitig strömt das vom achslastabhängigen Bremskraftregler kommende Druckmittel durch den zweiten Steueranschluß (94) und das geöffnete Schieberventil in die zweite Steuerkammer (93). Durch die Kraft des auf die zweite Wirkfläche (85) und die dritte Wirkfläche (95) des Kolbens (84) einwirkenden Druckes wird der Kolben (84) nach unten in Richtung auf die Arbeitskammer (107) zu verschoben. Der Dichtkörper (103) des Ventilgliedes (102) setzt auf dem als Auslaßventilsitz dienenden zweiten Ventilsitz (105) auf. Das Einlaßventil (104, 103) und das Auslaßventil (105, 103) des kombinierten Einlaß- und Auslaßventils (104, 103, 105) sind jetzt geschlossen. Bei der weiteren Abwärtsbewegung des Kolbens wird das Ventilglied (102) mit seinem Dichtkörper (103) vom Einlaßventilsitz (104) entgegen der Kraft der Feder (98) abgehoben. Von der Druckmitteleingangskammer (Steuerkammer 97) strömt Druckmittel in die Arbeitskammer (107) und von dieser weiter durch den Druckmittelausgang (108) zu den Bremszylindern.

Gleichzeitig mit diesen Vorgängen gelangt über den Kanal (87) und die Gehäusebohrung (91) Druckmittel aus der ersten Druckmittelquelle in die Kammer (52) des zusätzlichen Ventils und beaufschlagt die Wirkfläche (53) des kolbenartigen Körpers (55) des Ventilschiebers. Der vom achslastabhängigen Bremskraftregler in die zweite Steuerkammer (93) eingesteuerte Druck beaufschlagt gleichzeitig die Wirkfläche (67) des Schaltkolbens (65). Dadurch, daß die Wirkfläche (67) des Schaltkolbens größer ist als die dieser Wirkfläche entgegengerichtete Wirkfläche (53) des Ventilschiebers (55, 58), verbleibt der Schaltkolben (65) und somit auch der Ventilschieber (55, 58) in seiner Stellung. Die Wirkflächen (67) und (53) müssen so ausgelegt sein, daß bei gleichzeitiger Einsteuerung von Druckmittel in die Kammern (52) und (68) der Ventilschieber (55, 58) und der Schaltkolben (65) in ihrer Ruheposition verbleiben.

Ist der Druck in den Bremszylindern und somit auch in der Arbeitskammer (107) der Ventileinrichtung so weit angestiegen, daß die Kraft dieses Druckes der entgegengerichtet auf den Kolben (84) einwirkenden Kraft des Steuerdruckes gleich ist, so wird der Kolben (84) nach oben in Richtung auf die erste Steuerkammer (97) und die zweite Steuerkammer (93) zu bewegt. Das Ventilglied (102) mit dem Dichtkörper (103) setzt auf den Einlaßventilsitz (104) auf. Das Einlaßventil (102, 103, 104) ist jetzt geschlossen, so daß eine Abschlußstellung erreicht ist.

Werden beim anschließenden Bremslösevorgang die erste Steuerkammer (97) und die zweite Steuerkammer (93) entlüftet, so überwiegt die Kraft des auf die erste Wirkfläche (82) des Kolbens (84) einwirkenden Druckes in der Arbeitskammer. Der Kolbe (84) wird weiter nach oben in Richtung auf die erste Steuerkammer (97) und die zweite Steuerkammer (93) zu bewegt. Das mit dem Dichtkörper (103) versehene Ventilglied (102) wird vom Auslaßventilsitz (105) abgehoben und so die Arbeitskammer (108) über den Durchlaß (106) zur Atmosphäre hin entlüftet.

Fällt bei einer Bremsbetätigung der vom achslastabhängigen Bremskraftregler kommende Druck aus, so wird der Ventilschieber (55, 58) vom Druckmittel aus der ersten Druckmittelquelle in Richtung auf die zweite Kammer (68) des zusätzlichen Ventils zu verschoben. Die zweite Kammer (68) ist jetzt gegen die zweite Steuerkammer (93) abgesperrt und die erste Kammer (52) ist jetzt über den Kanal (77) in der Gehäusewand (92) mit der zweiten Steuerkammer verbunden. Die erste Steuerkammer (97) und die zweite Steuerkammer (93) werden jetzt mit dem Druck aus derselben Druckmittelquelle beaufschlagt.

## Patentansprüche

1. Ventileinrichtung mit folgenden Merkmalen:
a) Es ist ein kombiniertes Einlaß- und Auslaßventil (40, 41, 39 bzw. 104, 103, 105) vorgesehen, über welches ein Verbraucher wahlweise mit einer Druckmittelquelle oder mit der Atmosphäre verbindbar oder gegen beide absperrbar ist;
b) zur Betätigung des kombinierten Einlaß- und Auslaßventils (40, 41, 39 bzw. 104, 103, 105) ist ein Kolben (6 bzw. 84) vorgesehen, der eine vom Verbraucherdruck beaufschlagbare erste Wirkfläche (2 bzw. 82), eine vom Druckmittel aus einer ersten Druckmittelquelle beaufschlagbare zweite Wirkfläche (4 bzw. 85), die der ersten Wirkfläche (2 bzw. 82) entgegengerichtet ist, und eine vom Druckmittel aus einer zweiten Druckmittelquelle beaufschlagbare dritte Wirkfläche (31 bzw. 95), die ebenfalls der ersten Wirkfläche (2 bzw. 82) entgegengerichtet ist, aufweist;
gekennzeichnet durch die folgenden Merkmale:
c) es ist ein von einem Schaltkolben (19 bzw. 65) betätigbares zusätzliches Ventil (24, 18, 20, 19 bzw. 77, 76, 61, 57, 59, 54, 55) vorgesehen, über welches die dritte Wirkfläche (31 bzw. 95) des Kolbens (6 bzw. 84) in Abhängigkeit von der Stellung des Schaltkolbens (19 bzw. 65) mit dem Druckmittel aus der zweiten Druckmittelquelle oder mit dem Druckmittel aus der ersten Druckmittelquelle beaufschlagbar ist;
d) der Schaltkolben (19 bzw. 65) weist eine vom Druckmittel aus der ersten Druckmittelquelle beaufschlagbare erste Wirkfläche (a bzw. 53) und eine vom Druckmittel aus der zweiten Druckmittelquelle beaufschlagbare, der ersten Wirkfläche (a bzw. 53) des Schaltkolbens (19 bzw. 65) entgegengerichtete zweite Wirkfläche (21 bzw. 67) auf;
e) der Schaltkolben (19 bzw. 65) wird von einem Federelement (22 bzw. 71) in Beaufschlagungsrichtung des Druckmittels aus der zweiten Druckmittelquelle belastet;
f) die erste Wirkfläche (a bzw. 53) des Schaltkolbens (19 bzw. 65), die zweite Wirkfläche (21 bzw. 67) des Schaltkolbens (19 bzw. 65) und das Federelement (22 bzw. 71) sind so ausgelegt, daß bei Beaufschlagung der ersten Wirkfläche (a bzw. 53) des Schaltkolbens (19 bzw. 65) mit dem Druckmittel aus der ersten Druckmittelquelle und bei gleichzeitiger Beaufschlagung der zweiten Wirkfläche (21 bzw. 67) des Schaltkolbens (19 bzw. 65) mit dem Druckmittel aus der zweiten Druckmittelquelle das zusätzliche Ventil (24, 18, 20, 19 bzw. 77, 76, 61, 57, 59, 54, 55) sich in einer Stellung befindet, in der die dritte Wirkfläche (31 bzw. 95) des Kolbens (6 bzw. 84) mit dem Druckmittel aus der zweiten Druckmittelquelle beaufschlagt wird, und daß bei Ausfall des Druckes der zweiten Druckmittelquelle das zusätzliche Ventil (24, 18, 20, 19 bzw. 77, 76, 61, 57, 59, 54, 55) in eine Stellung gebracht wird, in der die dritte Wirkfläche (31 bzw. 95) des Kolbens (6 bzw. 84) mit dem Druckmittel aus der ersten Druckmittelquelle beaufschlagt wird.

2. Ventileinrichtung nach Anspruch 1, dadurch gekennzeichnet, daß das zusätzliche Ventil (24, 18, 20, 19 bzw. 77, 76, 61, 57, 59, 54, 55) als Schieberventil ausgebildet ist.

3. Ventileinrichtung nach den Ansprüchen 1 und 2, gekennzeichnet durch die folgenden Merkmale:
a) das Schieberventil besteht aus einem Ventilschieber (55, 58), der in einer Bohrung (64) des Ventilgehäuses (1 bzw. 110, 81) in Richtung seiner Längsachse verschiebbar angeordnet ist;
b) der Ventilschieber (55, 58) ist mit dem Schaltkolben (65) verbunden, der in einer an die Bohrung (64) zur Aufnahme des Ventilschiebers (55, 58) anschließenden Bohrung (73) abgedichtet verschiebbar angeordnet ist;
c) der Ventilschieber (55, 58) weist auf seiner dem Schaltkolben (65) abgewandten Seite eine Wirkfläche (53) auf, mit welcher er eine erste Kammer (52) des zusätzlichen Ventils (24, 18, 20, 19 bzw. 77, 76, 61, 57, 59, 54, 55) begrenzt, welche vom Druckmittel aus der ersten Druckmittelquelle beaufschlagbar ist;
d) der Schaltkolben (65) weist auf seiner der Wirkfläche (53) des Ventilschiebers (55, 58) abgewandten Seite eine Wirkfläche (67) auf, mit welcher er eine zweite Kammer (68) des zusätzlichen Ventils (24, 18, 20, 19 bzw. 77, 76, 61, 57, 59, 54, 55) begrenzt, die vom Druckmittel aus der zweiten Druckmittelquelle beaufschlagbar ist;
e) die die Bohrung (64) zur Aufnahme des Ventilschiebers (55, 58) begrenzende Wand (92) weist einen Kanal (77) auf, der die Bohrung (64) mit der dritten Steuerkammer (30 bzw. 93) verbindet;
f) mittels des Ventilschiebers (55, 58) ist die dritte Steuerkammer (30) wahlweise mit der zweiten Kammer (68) oder mit der ersten Kammer (52) des zusätzlichen Ventils (24, 18, 20, 19 bzw. 77, 76, 61, 57, 59, 54, 55) verbindbar.

4. Ventileinrichtung nach wenigstens einem der vorhergehenden Ansprüche, gekennzeichnet durch die folgenden Merkmale:
a) Es ist eine den Schaltkolben (65) durchdringende, sich in den Ventilschieber (55, 58) hinein erstreckende Bohrung (61) vorgesehen, die in Richtung der Längsachse des Schaltkolbens (65) und des Ventilschiebers (55, 58) verläuft;
b) der Ventilschieber (55, 58) weist eine Querbohrung (76) auf, die an die in Richtung der Längsachse des Ventilschiebers (55, 58) verlaufende Bohrung (61) anschließt;
c) die Querbohrung (76) des Ventilschiebers (55, 58) ist mit dem in der Gehäusewand (92) vorgesehenen Kanal (77) in der einen Schaltstellung des Schaltkolbens (65) zur Deckung bringbar;
d) die erste Kammer (52) des zusätzlichen Ventils (24, 18, 20, 19 bzw. 77, 76, 61, 57, 59, 54, 55) ist in der anderen Schaltstellung des Schaltkolbens (65) mit der in der Gehäusewand (92) vorgesehenen Querbohrung (76) verbindbar;
e) hinter und vor der Querbohrung (76) des Ventilschiebers (55, 58) ist je ein Dichtring (56 bzw. 59) angeordnet;
f) zwischen dem der Rückwand des Schaltkolbens (65) zugewandten Dichtring (59) und der Rückwand des Schaltkolbens (65) ist im zusätzlichen Ventil (24, 18, 20, 19 bzw. 77, 76, 61, 57, 59, 54, 55) ein Ringraum (64) vorgesehen;
g) der Ringraum (64) steht über einen im Ventilschieber (55, 58) vorgesehenen weiteren Kanal (60) sowie einen an diesen anschließenden Raum (56) mit einem im Gehäuse (1) vorgesehenen Kanal (75 und 96 bzw. 50) in Verbindung, welcher zur Atmosphäre hin führt.

5. Ventileinrichtung nach wenigstens einem der vorhergehenden Ansprüche, dadurch gekennzeichnet, daß der Ventilschieber (55, 58) quer zu seiner Längsachse geteilt ausgebildet ist, und zwar in einen die Kanäle (76, 60, 61) sowie die Kammer (56) enthaltenden Teil (58) und einen auf der Seite der Kammer (56) gelegenen kolbenartigen Teil (55), wobei das kolbenartige Teil (55) mit seiner der ersten Kammer (52) abgewandten Stirnseite an Vorsprüngen (78) der dem kolbenartigen Teil (55) zugewandten Stirnseite des Teiles (58) anliegt.

6. Ventileinrichtung nach wenigstens einem der vorhergehenden Ansprüche, dadurch gekennzeichnet, daß der Schaltkolben (65) von einem Federelement (22 bzw. 71) in Beaufschlagungsrichtung des Druckmittels aus der zweiten Druckmittelquelle beaufschlagt wird.

7. Ventileinrichtung nach wenigstens einem der vorhergehenden Ansprüche, dadurch gekennzeichnet, daß in der den Schaltkolben (65) aufnehmenden Bohrung (73 bzw. 68) zwei einander gegenüber angeordnete Anschläge (79) und (72) vorgesehen sind, mittels welchen der Schaltkolben (65) in zwei vorbestimmten Schaltstellungen haltbar ist.

8. Ventileinrichtung nach Anspruch 1, dadurch gekennzeichnet, daß das zusätzliche Ventil aus einem vom Druckmittel aus der ersten Druckmittelquelle und vom Druckmittel aus der zweiten Druckmittelquelle beaufschlagbaren Ventilglied besteht, welches mit einer zur dritten Steuerkammer führenden Gehäusebohrung zusammenwirkt.

9. Ventileinrichtung nach Anspruch 1, dadurch gekennzeichnet, daß das zusätzliche Ventil als Wechselventil ausgebildet ist, dessen Ventilglied von den einander entgegengerichteten Drücken aus der ersten Druckmittelquelle und der zweiten Druckmittelquelle beaufschlagbar ist.

10. Ventileinrichtung nach wenigstens einem der vorhergehenden Ansprüche, dadurch gekennzeichnet, daß das zusätzliche Ventil in einem separaten Gehäuse angeordnet ist, welches mit der Ventileinrichtung verbunden ist.

11. Ventileinrichtung nach wenigstens einem der vorhergehenden Ansprüche, dadurch gekennzeichnet, daß das zusätzliche Ventil in den Schaltkolben integriert ist.

12. Ventileinrichtung nach wenigstens einem der vorhergehenden Ansprüche, dadurch gekennzeichnet, daß Mittel zum Einstellen der Kraft der auf den Schaltkolben (65) einwirkenden Feder (22 bzw. 71) vorgesehen sind.

13. Ventileinrichtung nach wenigstens einem der vorhergehenden Ansprüche, dadurch gekennzeichnet daß das Gehäuse des zusätzlichen Ventils Bestandteil des Gehäuses (1, 46 bzw. 110, 81) der Ventileinrichtung ist.

14. Ventileinrichtung nach wenigstens einem der vorhergehenden Ansprüche, dadurch gekennzeichnet, daß das zusätzliche Ventil oberhalb des Kolbens (6 bzw. 84), d. h. der dritten Wirkfläche (31 bzw. 95) des Kolbens (6 bzw. 84) gegenüber mit seiner Längsachse quer zur Längsachse des Kolbens (6 bzw. 84) angeordnet ist.

## Claims

1. Valve device having the following features:
a) A combined inlet and outlet valve (40, 41, 39 or 104, 103, 105) is provided via which a load can be connected selectively to a pressure medium source or to the atmosphere, or can be closed off from both of them;
b) for actuation of the combined inlet and outlet valve (40, 41, 39 or 104, 103, 105) a piston (6 or 84) is provided having a first effective surface area (2 or 82) that can be acted upon by the load pressure, a second effective surface area (4 or 85) which faces in the opposite direction to the first effective surface area (2 or 82) and can be acted upon by the pressure medium from a first pressure medium source, and a third effective surface area (31 or 95) which likewise faces in the opposite direction to the first effective surface area (2 or 82) and which can be acted upon by the pressure medium from a second pressure medium source;
characterised by the following features:
c) an additional valve (24, 18, 20, 19 or 77, 76, 61, 57, 59, 54, 55) is provided that can be actuated by a control piston (19 or 65) and via which the third effective surface area (31 or 95) of the piston (6 or 84), depending on the position of the control piston (19 or 65), can be acted upon by the pressure medium from the second pressure medium source or by the pressure medium from the first pressure medium source;
d) the control piston (19 or 65) has a first effective surface area (a or 53) which can be acted upon by the pressure medium from the first pressure medium source, and a second effective surface area (21 or 67) which can be acted upon by the pressure medium from the second pressure medium source and which faces in the opposite direction to the first effective surface area (a or 53) of the control piston (19 or 65);
e) the control piston (19 or 65) is loaded by a spring element (22 or 71) in the direction in which the pressure medium from the second pressure medium source acts;
f) the first effective surface area (a or 53) of the control piston (19 or 65), the second effective surface area (21 or 67) of the control piston (19 or 65) and the spring element (22 or 71) are so designed that, when the first effective surface area (a or 53) of the control piston (19 or 65) is acted upon by the pressure medium from the first pressure medium source and, simultaneously, the second effective surface area (21 or 67) of the control piston (19 or 65) is acted upon by the pressure medium from the second pressure medium source, the additional valve (24, 18, 20, 19 or 77, 76, 61, 57, 59, 54, 55) is in a position in which the third effective surface area (31 or 95) of the piston (6 or 84) is acted upon by the pressure medium from the second pressure medium source, and that, if the pressure from the second pressure medium source fails, the additional valve (24, 18, 20, 19 or 77, 76, 61, 57, 59, 54, 55) is brought to a position in which the third effective surface area (31 or 95) of the piston (6 or 84) is acted upon by the pressure medium from the first pressure medium source.

2. Valve device according to claim 1, characterised in that the additional valve (24, 18, 20, 19 or 77, 76, 61, 57, 59, 54, 55) is in the form of a sliding valve.

3. Valve device according to claims 1 and 2, characterised by the following features:
a) the sliding valve consists of a valve slide member (55, 58) which is arranged in a bore (64) of the valve housing (1 or 110, 81) to be displaceable in the direction of its longitudinal axis;
b) the valve slide member (55, 58) is connected to the control piston (65) which is displaceably arranged, in a sealed manner, in a bore (73) which adjoins the bore (64) for receiving the valve slide member (55, 58);
c) the valve slide member (55, 58) has on its side remote from the control piston (65) an effective surface area (53), with which it defines a first chamber (52) of the additional valve (24, 18, 20, 19 or 77, 76, 61, 57, 59, 54, 55), which chamber can be acted upon by the pressure medium from the first pressure medium source;
d) the control piston (65) has on its side remote from the effective surface area (53) of the valve slide member (55, 58) an effective surface area (67), with which it defines a second chamber (68) of the additional valve (24, 18, 20, 19 or 77, 76, 61, 57, 59, 54, 55), which chamber can be acted upon by the pressure medium from the second pressure medium source;
e) the wall (92) which defines the bore (64) for receiving the valve slide member (55, 58) has a channel (77) which connects the bore (64) to the third control chamber (30 or 93);
f) the third control chamber (30) is connectable selectively to the second chamber (68) or to the first chamber (52) of the additional valve (24, 18, 20, 19 or 77, 76, 61, 57, 59, 54, 55) by means of the valve slide member (55, 58).

4. Valve device according to at least one of the preceding claims, characterised by the following features:
a) A bore (61) is provided that passes through the control piston (65) and extends into the valve slide member (55, 58), which bore runs in the direction of the longitudinal axis of the control piston (65) and of the valve slide member (55, 58);
b) the valve slide member (55, 58) has a transverse bore (76) which adjoins the bore (61) which runs in the direction of the longitudinal axis of the valve slide member (55, 58);
c) the transverse bore (76) of the valve slide member (55, 58) can be caused to coincide with the channel (77) provided in the housing wall (92) in one operating position of the control piston (65);
d) the first chamber (52) of the additional valve (24, 18, 20, 19 or 77, 76, 61, 57, 59, 54, 55) is connectable in the other operating position of the control piston (65) to the transverse bore (76) provided in the housing wall (92);
e) a sealing ring (56 and 59) is arranged both behind and in front of the transverse bore (76) of the valve slide member (55, 58);
f) an annular area (64) is provided in the additional valve (24, 18, 20, 19 or 77, 76, 61, 57, 59, 54, 55) between the sealing ring (59) that faces the rear wall of the control piston (65) and the rear wall of the control piston (65);
g) the annular area (64) is connected, via a further channel (60) provided in the valve slide member (55, 58) and via an area (56) adjoining that channel, to a channel (75 and 96 or 50) provided in the housing (1), which channel leads to the atmosphere.

5. Valve device according to at least one of the preceding claims, characterised in that the valve slide member (55, 58) is of a construction that is divided at right angles to its longitudinal axis into a part (58) that contains the channels (76, 60, 61) and the chamber (56) and a piston-like part (55) that lies against the side of the chamber (56), the piston-like part (55) resting with its face remote from the first chamber (52) against projections (78) of the face of the part (58) that faces the piston-like part (55).

6. Valve device according to at least one of the preceding claims, characterised in that the control piston (65) is acted upon by a spring element (22 or 71) in the direction in which the pressure medium from the second pressure medium source acts.

7. Valve device according to at least one of the preceding claims, characterised in that in the bore (73 or 68) which receives the control piston (65) two stops (79) and (72) are provided arranged opposite to one another, by means of which the control piston (65) can be held in two predetermined operating positions.

8. Valve device according to claim 1, characterised in that the additional valve consists of a valve member that can be acted upon by the pressure medium from the first pressure medium source and by the pressure medium from the second pressure medium source, which valve member works in conjunction with a housing bore leading to the third control chamber.

9. Valve device according to claim 1, characterised in that the additional valve is in the form of a changeover valve, the valve member of which can be acted upon by the oppositely directed pressures from the first pressure medium source and the second pressure medium source.

10. Valve device according to at least one of the preceding claims, characterised in that the additional valve is arranged in a separate housing which is connected to the valve device.

11. Valve device according to at least one of the preceding claims, characterised in that the additional valve is integrated in the control piston.

12. Valve device according to at least one of the preceding claims, characterised in that means are provided for adjusting the force of the spring (22 or 71) which acts upon the control piston (65).

13. Valve device according to at least one of the preceding claims, characterised in that the housing of the additional valve is a component of the housing (1, 46 or 110, 81) of the valve device.

14. Valve device according to at least one of the preceding claims, characterised in that the additional valve is arranged above the piston (6 or 84), that is to say opposite the third effective surface area (31 or 95) of the piston (6 or 84), its longitudinal axis being at right angles to the longitudinal axis of the piston (6 or 84).

## Revendications

1. Dispositif de robinet ayant les particularités suivantes:
a) il comprend une soupape combinée d'admission et d'échappement (40, 41, 39; 104, 103, 105) par laquelle un consommateur peut sélectivement être relié à une source de fluide de pression ou à l'atmosphère, ou coupé des deux;
b) pour l'actionnement de la soupape combinée d'admission et d'échappement (40, 41, 39; 104, 103, 105), il comprend un piston (6; 84) qui présente une première face utile (2; 82) à laquelle est applicable la pression de consommateur, une deuxième face utile (4; 85) à laquelle est applicable du fluide de pression provenant d'une première source de fluide pression et qui est dirigée en sens contraire à la première face utile (2; 82), ainsi qu'une troisième face utile (31; 95) à laquelle est applicable du fluide de pression provenant d'une seconce source de fluide de pression et qui est également dirigée en sens contraire à la première face utile (2; 82);
caractérise en ce que:
c) il comprend une soupape supplémentaire (24, 18, 20, 19; 77, 76, 61, 57, 59, 54, 55) pouvant être actionnée par un piston de manoeuvre (19; 65) et à travers de laquelle la troisième face utile (31; 95) du piston (6; 84) peut être soumise, suivant la position du piston de manoeuvre (19; 65), au fluide de pression provenant de la seconde source de fluide ou au fluide de pression provenant de la première source de fluide;
d) le piston de manoeuvre (19; 65) présente une première face utile (a; 53) à laquelle est applicable le fluide de pression provenant de la première source de fluide et une deuxième face utile (21; 67) à laquelle est applicable le fluide de pression provenant de la seconde source de fluide et qui est dirigée en sens contraire à la première face utile (a; 53) du piston de manoeuvre (19; 65);
e) le piston de manoeuvre (19; 65) est chargé par un élément élastique (22; 71) dans le même sens que celui produit par l'application du fluide de pression provenant de la seconde source de fluide;
f) la première face utile (a; 53) du piston de manoeuvre (19; 65), la deuxième face utile (21; 67) du piston de manoeuvre (19; 65) et l'élément élastique (22; 71) sont conçus pour que, en cas d'application à la première face utile (a; 53) du piston de manoeuvre (19; 65) du fluide de pression provenant de la première source de fluide et d'application simultanée à la deuxième face utile (21; 67) du piston de manoeuvre (19; 65) du fluide de pression provenant de la seconde source de fluide, la soupape supplémentaire (24, 18, 20, 19; 77, 76, 61, 57, 59, 54, 55) se trouve à une position dans laquelle la troisième face utile (31; 95) du piston (6; 84) est soumise au fluide de pression provenant de la seconde source de fluide et que, en cas de disparition de la pression de la seconde source de fluide, la soupape supplémentaire (24, 18, 20, 19; 77, 76, 61, 57, 59, 54, 55) soit amenée à une position dans laquelle la troisième face utile (31; 95) du piston (6; 84) est soumise au fluide de pression provenant de la première source de fluide.

2. Dispositif de robinet selon la revendication 1, caractérisé en ce que la soupape supplémentaire (24, 18, 20, 19; 77, 76, 61, 57, 59, 54, 55) est réalisée comme une soupape à tiroir.

3. Dispositif de robinet selon les revendications 1 et 2, caractérisé en ce que:
a) la soupape à tiroir comprend un tiroir (55, 58) disposé coulissant dans un alésage (64) du corps de robinet (1; 110, 81), dans le sens de son axe longitudinal;
b) le tiroir (55, 58) est relié au piston de manoeuvre (65), lequel est disposé coulissant à joint étanche dans un alésage (73) se raccordant à l'alésage (64) pour la réception du tiroir (55, 58);
c) sur son côté éloigné du piston de manoeuvre (65), le tiroir (55, 58) présente une face utile (53) par laquelle il délimite une première chambre (52) de la soupape supplémentaire (24, 18, 20, 19; 77, 76, 61, 57, 59, 54, 55), face utile qui peut être soumise au fluide de pression provenant de la première source de fluide;
d) sur son côté éloigné de la face utile (53) du tiroir (55, 58), le piston de manoeuvre (65) présente une face utile (67) par laquelle il délimite une deuxième chambre (68) de la soupape supplémentaire (24, 18, 20, 19; 77, 76, 61, 57, 59, 54, 55), face utile qui peut être soumise au fluide de pression provenant de la seconde source de fluide;
e) la paroi (92) délimitant l'alésage (64) pour la réception du tiroir (55, 58) présente un canal (77) qui relie l'alésage (64) à la troisième chambre de commande (30; 93);
f) au moyen du tiroir (55, 58), la troisième chambre de commande (30) peut être reliée sélectivement à la deuxième chambre (68) ou à la première chambre (52) de la soupape supplémentaire (24, 18, 20, 19; 77, 76, 61, 57, 59, 54, 55).

4. Dispositif de robinet selon au moins une des revendications précédentes, caractérisé en ce que:
a) un perçage (61) traverse le piston de manoeuvre (65), s'étend dans le tiroir (55, 58) et est orienté dans le sens de l'axe longitudinal du piston de manoeuvre (65) et du tiroir (55, 58);
b) le tiroir (55, 58) présente un perçage transversal (76) se raccordant au perçage (61) orienté dans le sens de l'axe longitudinal du tiroir (55, 58);
c) le perçage transversal (76) du tiroir (55, 58) peut être amené en coïncidence avec le canal (77) prévu dans la paroi (92) du corps à l'une des positions du piston de manoeuvre (65);
d) la première chambre (52) de la soupape supplémentaire (24, 18, 20, 19; 77, 76, 61, 57, 59, 54, 55) peut être reliée au perçage transversal (77) prévu dans la paroi (92) du corps à l'autre position du piston de manoeuvre (65);
e) des bagues d'étanchéité (56, 59) sont disposées respectivement derrière et devant le perçage transversal (76) du tiroir (55, 58);
f) un espace annulaire (64) est prévu entre la bague d'étanchéité (59) dirigée vers la paroi arrière du piston de manoeuvre (65) et cette paroi arrière à l'intérieur de la soupape supplémentaire (24, 18, 20, 19; 77, 76, 61, 57, 59, 54, 55);
g) l'espace annulaire (64) communique, à travers un autre canal (60) prévu dans le tiroir (55, 58), ainsi qu'un espace (56) se raccordant à ce canal, avec un canal (75 et 96; 50) prévu dans le corps (1) et menant à l'atmosphère.

5. Dispositif de robinet selon au moins une des revendications précédentes, caractérisé en ce que le tiroir (55, 58) est divisé transversalement à son axe longitudinal, plus exactement en une partie (58) contenant les canaux (76, 60, 61) ainsi que la chambre (56), et une partie ou pièce (55) semblable à un piston et située du coté de la chambre (56), pièce (55) qui, par son côté d'extrémité éloigné de la première chambre (52), est appliquée contre des saillies (78) du côté d'extrémité dirigées vers cette pièce (55) de la partie (58).

6. Dispositif de robinet selon au moins une des revendications précédentes, caractérisé en ce que le piston de manoeuvre (65) est chargé par un élément élastique (22; 71) dans le même sens que celui produit par l'application du fluide de pression provenant de la seconde source de fluide.

7. Dispositif de robinet selon au moins une des revendications précédentes, caractérisé en ce que deux butées (79 et 72) sont prévues dans l'alésage (73; 68) recevant le piston de manoeuvre (65), butées qui sont disposées l'une à l'opposé de l'autre et au moyen desquelles le piston de manoeuvre (65) peut être maintenu à deux positions préfixées.

8. Dispositif de robinet selon la revendication 1, caractérise en ce que la soupape supplémentaire est formée d'un élément mobile de soupape auquel peut être appliqué du fluide de pression provenant de la première source de fluide et du fluide de pression provenant de la seconde source de fluide, élément mobile qui coopère avec un perçage ménagé dans le corps et menant à la troisième chambre de commande

9. Dispositif de robinet selon la revendication 1, caractérisé en ce que la soupape supplémentaire est réalisée comme une soupape de renversement dont l'élément mobile peut être soumis aux pressions, agissant dans des sens contraires, provenant de la première source de fluide et de la seconde source de fluide.

10. Dispositif de robinet selon au moins une des revendications précédentes, caractérisé en ce que la soupape supplémentaire est disposée dans un corps séparé relié au dispositif de robinet.

11. Dispositif de robinet selon au moins une des revendications précédentes, caractérisé en ce que la soupape supplémentaire est intégrée dans le piston de manoeuvre.

12. Dispositif de robinet selon au moins une des revendications précédentes, caractérisé en ce qu'il comprend des moyens pour ajuster la force de l'élément élastique ou ressort (22; 71) agissant sur le piston de manoeuvre (65).

13. Dispositif de robinet selon au moins une des revendications précédentes, caractérisé en ce que le corps de la soupape supplémentaire fait partie du corps (1, 46; 110, 81) du dispositif de robinet.

14. Dispositif de robinet selon au moins une des revendications précédentes, caractérisé en ce que la soupape supplémentaire est disposée au-dessus du piston (6; 84), c'est-à-dire en regard de la troisième face utile (31; 95) du piston (6; 84), avec son axe longitudinal orienté transversalement à l'axe longitudinal du piston (6; 84).
